# EUROPEAN PATENT SPECIFICATION

(11) **EP 0 491 823 B1**
(45) Date of publication and mention of the grant of the patent: **10.08.1994**
(21) Application number: 90914239.0
(22) Date of filing: 10.09.1990
(51) Int. Cl.: B23Q 3/154

(54) **MAGNETIC CHUCK**
MAGNETSPANNPLATTE
MANDRIN MAGNETIQUE

(30) Priority: 12.09.1989 NL 8902277
(43) Date of publication of application: 01.07.1992
(73) Proprietor: Walker-Hagou B.V., NL-5531 AD Bladel (NL)
(72) Inventor: LUYTEN, Cornelis, Theodorus, Petrus, Maria, NL-5595 HN Leende (NL)
(74) Representative: Metman, Karel Johannes
(86) International application number: NL9000129
(87) International publication number: WO9104129

(56) References cited:
- CH-A- 247 779
- FR-A- 1 149 428
- FR-A- 2 546 792
- FR-A- 2 548 945
- GB-A- 785 246
- US-A- 2 795 740
- US-A- 2 947 921
- US-A- 3 142 006
- PATENT ABSTRACTS OF JAPAN, vol. 9, no. 57 (M-363)(1780) 13 March 1985, & JP-A-59 192432 (KANETSUU KOGYO K.K.) 31 October 1984

## Description

The invention relates to a magnetic chuck according to the preamble of claim 1.

It is known from practice to combine such magnetic chuck (see US-A-29 47 921) with a pallet for reproducible positioning on the working table of a machining apparatus.

It is an object of the present invention to further improve such combination of magnetic chuck and pallet.

For this purpose the magnetic chuck according to the invention has the feature of the characterizing part of claim 1.

Due to this feature the chuck is so to say partially flush-mounted into the pallet so that the total height of the combination chuck/pallet is reduced substantially. Also the weight of the combination is decreased.

As is usual, the inner system is switchable between an on-position in which a maximum force is produced on the upper surface of the top plate, and an off-position in which no or substantially no external magnetic force is produced. According to an ambodiment of the invention it is preferable to provide a linear displacement mechanism for the inner system, with which the inner system is slidable parallel to the top plate between the on- and off-position.

The linear displacement mechanism has many advantages. In the first place, the sliding motion of the inner system parallel to the top plate does not cause a force exerted in a direction perpendicular to the clamping surface of the top plate, contrary to an adjustment by means of an excentric mechanism, for example, where the inner system has to be pulled loose of the top plate. Due to the absence of forces normal to the top plate deformations of the top plate as a consequence thereof will also not appear. This is particularly favourable in case of a small pole pitch and consequently thin top plate which will be stable due to the linear displacement mechanism and which can meet high accuracy requirements also after a length of time. Furthermore the linear displacement mechanism also enables the reduction of the total height of the chuck as the inner system performs a horizontal and not a vertical movement. Further, the linear displacement system opens the possibility of a variable holding force. Then, the inner system can assume an effective intermediate position between the on- and off-positions due to the displacement parallel to the top plate, so that the holding force may be varied between the maximum and the minimum which eases the positioning of work pieces on the chuck. Still a further advantage is that the linear displacement mechanism may generally be constructed very compact, for example in the form of a spindle and nut drive, thereby substantially reducing the area on the top plate having a weakened holding force. Especially in case of a small pole pitch the spindle and nut drive can be constructed very compact because the stroke required for the inner system is equal to the pole pitch.

A further embodiment of the chuck according to the invention is characterized in that the inner system is devided by a vertical partition into at least two inner system parts each provided with its own displacement mechanism.

This division of the inner system causes the creation of two sections on the surface of the top plate of the chuck, which may be operated seperately. The advantage of this structure is that, when several work pieces are clamped, one work piece can be clamped on one half of the top plate, while another work piece may still be positioned on the other half.

In this embodiment it is advantageous when the inner system parts are spaced from each other, while between the inner system parts the top plate is supported by a support portion of the housing.

This feature substantially magnifies the stiffness of the top plate so that the height of the top plate may be reduced without affecting the stability of the top plate. Of course it could be possible to realize such a support portion for the top plate without the independent operation of the inner system parts, by interconnecting the inner system parts or by providing only a recess in a single inner system for the passage of the support portion of the housing.

In an embodiment of the magnetic chuck used in a condition submerged into a fluid, wherein a fluid supply line is connectable to the chuck, and flushing holes for the fluid open through the upper surface of the top plate, it is proposed according to the invention that the flushing holes are distributed in a regular pattern on the surface of the top plate and are provided with screw-thread for receiving tap bolts of mechanical clamping elements or the like.

This embodiment has the advantage that the chuck may not only be used for magnetically clamping work pieces of non-magnetizable material so that the possible uses of the chuck are substantially increased. Furthermore, the large number of flushing holes will always insure a proper circulation of the fluid.

In this embodiment it is possible to provide a plurality of distribution tubes within the top plate at regular intervals, the distribution tubes connecting to the flushing holes and are supplied by a supply channel. Further, the distribution tubes may be spaced from each other a multiple of pole pitches and may be disposed under the parts of non-magnetizable material in the top plate.

The invention will hereafter be elucidated with reference to drawing showing two embodiments of the magnetic chuck by way of example.

Figure 1 is a schematic, partially cut-away, perspective view of a first embodiment of the magnetic chuck in combination with a pallet.

Figure 2 is a view corresponding to that of figure 1 showing an embodiment of the magnetic chuck according to the invention.

In the two embodiments like parts are indicated with like reference numerals.

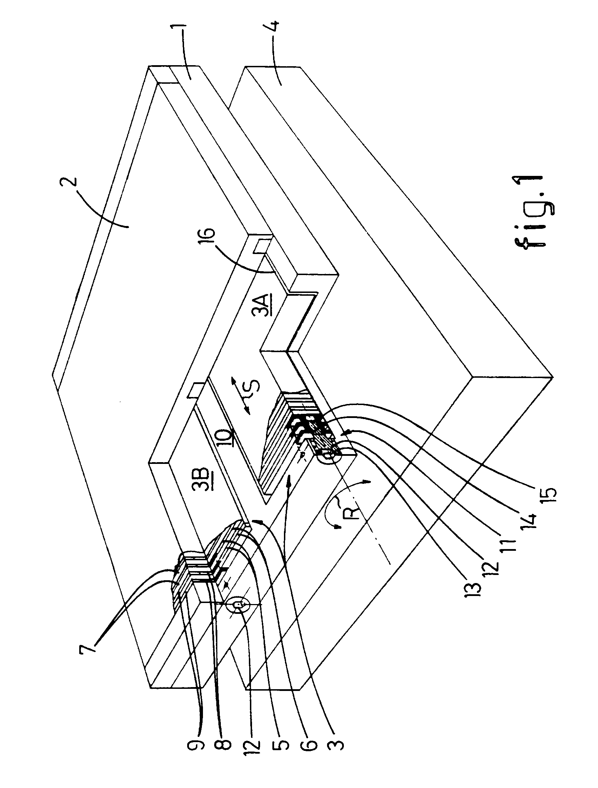

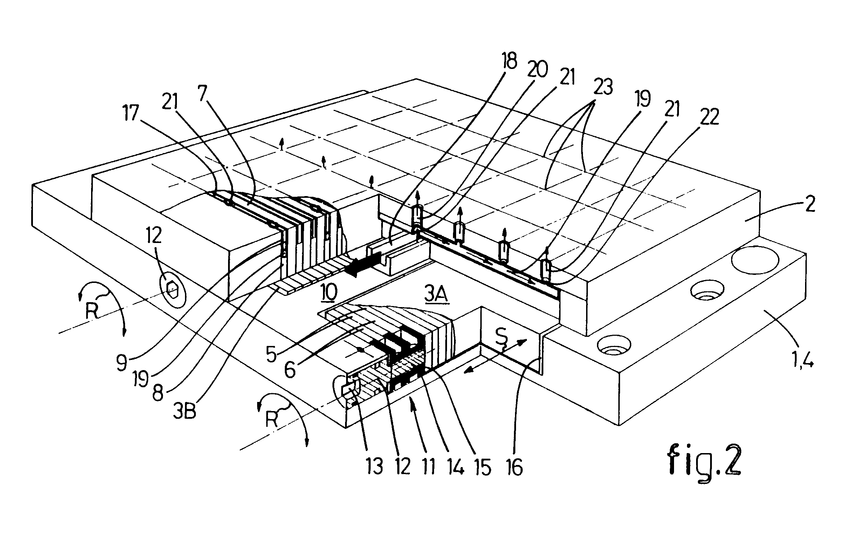

The embodiment of Fig. 1 per se does not constitute part of the present invention, but features of this embodiment may be incorporated into the embodiment of Fig. 2 which is illustrative to the present invention.

Fig. 1 shows an embodiment of the magnetic chuck according to the invention, which is provided with a housing 1, a top plate 2 fixed on the housing 1, for example by means of screws, and an inner system 3 adjustably provided within the housing 1 under the top plate 2. In the case shown the magnetic chuck is combined with a pallet 4. This pallet 4, on which the housing 1 of the magnetic chuck may be fastened, can be mounted without adjustment on the working table of a machining apparatus in a very accurate and reproducable manner by means of an adjusting and clamping system. As a result thereof, the work piece can be accurately clamped onto the magnetic chuck separate from the machining apparatus so that no time is lost at the machining apparatus for clamping the work piece.

The magnetic chuck shown in Fig. 1 is constructed according to the so called compensation principle, wherein the inner system 3 is provided with a plurality of alternatively disposed parallel magnetic elements 5 and pole parts 6 of magnetizable material, while in the top plate 6 there are provided, with the same distribution, pole parts 7 and magnetic elements 8 with overhead parts 9 of non-magnetizable material. The inner system 3 is switchable between an on-position, in which the north and south poles of the top plate 2 are lying above the north and south poles of the inner system 3 and thereby producing a maximum holding force at the upper surface of the top plate 2, and an off-position in which the north and south poles of the top plate 2 are positioned above the south and north poles respectively of the inner system 3 and consequently no or substantially no external holding force is produced.

The magnetic elements preferably consist of ceramic magnets, such as Ferroxdure, and the pole parts 6 and 7 may be formed from soft steel. The parts 9 of non-magnetizable material can be made of stainless steel or brass, for instance. In order to obtain a low weight of the magnetic chuck, the housing 1 is preferably made of aluminium and the top plate 2 being disposed onto the housing 1 in a magnetic isolated manner. Of course, also other materials may be used.

The pole pitch of the top plate 2 and the inner system 3 is very small. This pole pitch which is defined by the center distance of the adjacent north and south pole in the top plate 2 and the inner system 3 or the width of a magnetic element 8 and a pole part 7, respectively, is smaller than ca. 8 mm and preferably ca. 6 mm or even smaller. The small pole pitch and resulting very fine division of the pole parts 6 and 7 has the advantage that the magnetic lines of flux penetrate into the clamped work piece only to a very small height and consequently very thin work pieces may be clamped without adverse effects of the magnetic fields. The small pole pitch also enables the height of the top plate to be reduced. In the embodiment shown by way of example the thickness or width of the pole parts 6 and 7 is twice as large as the thickness or width of the magnetic elements 5 and 8, so that a relatively large holding force can be produced.

In the embodiment shown in Fig. 1, the inner system 3 is divided into two inner system parts 3a and 3b being identical and being positioned in the housing 1 spaced from each other, so that between both inner system parts 3A and 3B there is room for a support portion 10 of the housing 1 for supporting the top plate 2 in the center thereof.

Each inner system part 3A, 3B is provided with its own adjusting or switching mechanism, so that both inner system parts 3A and 3B may be adjusted independently of each other, thereby creating two clamping areas on the upper surface of the top plate 2.

Both inner system parts 3A and 3B are each adjustable by means of a linear displacement mechanism, in this case consisting of a spindle and nut drive. By means thereof the respective inner system part 3A, 3B can be slid parallel to the top plate 2 between the on- and off-positions (see arrow S), wherein also each intermediate position can be assumed so as to effect a continuously variable holding force adjustment.

The spindle and nut drive 11 as shown includes a spindle 12 which is mounted in the wall of the housing 1 in a rotatable and sealed manner and being secured from an axial displacement. At the external end the spindle 12 is provided with a hexagonal socket in which a wrench can be inserted for rotating the spindle (see arrow R). At the internal end the spindle 12 is provided with an external screw-thread portion 14 being in engagement with the internal screw-thread of a nut 15 of the spindle and nut drive 11 for converting the rotational movement of the spindle 12 into e linear displacement of the nut 15 and consequently of the inner system part 3A, 3B. This nut 15 is inserted from above into a recess in the inner system part 3A, 3B. This nut 15 is inserted from above into a recess in the inner system part 3A, 3B, the nut 15 including lateral grooves and ribs which are in engagement with ribs and grooves formed in the inner system part 3A, 3B such that pole parts 6 of the inner system part 3A, 3B penetrate into the grooves of the nut 15. As the nut is received in the inner system part 3A, 3B slidable in vertical height, tolerances in vertical height can easily be compensated. Lateral tolerances are also easily compensated, since the inner system part 3A, 3B is received in a recess 16 in the housing 1 with lateral play.

Due to the small pole pitch of the inner system and consequently the small required stroke thereof between the on- and off-positions, the spindle and nut drive may be constructed in a very compact manner. The stroke between the on- and off-positions of the inner system part 3A, 3B may for example correspond to a 180° turn of the spindle 12.

Between the inner system parts 3A and 3B and the bottom of the housing 1 there may be provided spring elements, such as leaf springs for example, holding the inner system parts constantly in contact with the top plate 2 thereby assuring a lasting proper operation of the magnetic chuck.

Fig. 2 shows an embodiment of a magnetic chuck according to the invention, of which the principal structure is similar to that of Fig. 1. In the embodiment according to Fig. 2, however, the magnetic chuck is combined with the pallet 4 such that the pallet 4 also forms the housing for the chuck to such extent that the inner system 3 is fully received within the pallet 4 and the top plate 2 is mounted directly onto the pallet 4. The height of the combination of magnetic chuck and pallets may consequently be reduced to a substantial extent.

The pole pitch of the top plate 2 and the inner system 3 in the embodiment of Fig. 2 is of a usual magnitude, and in the parts 9 of non-magnetizable material in the top plate 2 intermediate poles 17 are received. Of course, it would also be possible to construct the top plate 2 and the inner system 3 with the same pole pitch as in the embodiment of Fig. 1.

The magnetic chuck according to Fig. 2 is adapted to be used in a submerged condition, i.e. it is disposed in a bath containing liquid. Such use may for instance be the clamping of a work piece to be machined by spark erosion. In order to remove chips formed at the machined surface, the liquid is circulated, wherein a pump discharges the liquid from the bath, the liquid then being filtered and the cleaned liquid is thereafter returned to the liquid bath through the magnetic chuck.

For this purpose the magnetic chuck is provided with a connection for a liquid supply line not shown. From this connection the liquid is carried to a supply channel 18 which is formed within the top plate 2. In the embodiment shown, the supply channel 18 is positioned in a channel-shaped part in the top plate 2, which is placed onto the central support portion 10 of the housing. Transverse to the supply channel 18 extends a plurality or regularly spaced distribution tubes 19 each connecting to the supply channel 18 through a passage opening 20. The distribution tubes are spaced at a multiple distance of the pole pitch and are each provided between a magnetic element 8 and a part of non-magnetizable material 9 and are fixed into the top plate 2 in a watertight manner when the entire top plate 2 is soldered. After providing the magnetic elements 8 the top plate 2 is finished on its lower side with epoxy resin or the like.

The distribution tubes 19 open into the upper surface of the top plate 2 through rows of flushing holes 21 connecting to the respective distribution tubes 19 through a boring 22 of small diameter. The spacing between the flushing holes connecting to one single distribution tube 19 is equal to the spacing between the several distrubtion tubes 19, so that all adjacent flushing holes 21 have an equal spacing to each other and the flushing holes are regularly distributed over the surface of the top plate 2. The flushing holes within a grid 23 are provided, at least along a portion of their length from the upper surface of the top plate 2, with screw-thread, for instance of size M6, in which tap bolts of a mechanical clamping system can engage. As a result thereof it is made possible to clamp work pieces of non-magnetizable material, which can thus not be clamped magnetically, by means of mechanical fixtures onto the upper surface of the top plate 2 of the chuck. In this manner the flushing holes 21 have a double function.

From the foregoing it will be clear that the invention provides a magnetic chuck which is outstanding due to a very low magnetic field above the top plate, a very small height of the magnetic chuck in combination with a pallet, a variable magnetic force control, a very stable top plate despite the small height thereof, a low weight and a very large clamping area rate. Further, the magnetic chuck can be made suitable for magnetically or mechanically clamping work pieces to be machined by spark erosion.

## Claims

1. Magnetic chuck, comprising a housing (1), a top plate (2) having pole parts (7) and being fixed to the housing (1), and an inner system (3) having magnetic elements (5) and pole parts (6) and being provided within the housing (1) under the top plate (2), the magnetic chuck being combined with a pallet (4) for reproducible positioning on the working table of a machining apparatus, **characterized** in that the pallet (4) serves as housing for the magnetic chuck, and at least the inner system (3) being provided within the pallet (4).

2. Magnetic chuck according to claim 1, **characterized** in that the inner system (3) is received in the pallet (4) and the top plate (2) is mounted on the pallet.

3. Magnetic chuck according to claim 1 or 2, wherein the top plate (2) comprises a plurality of spaced pole parts (7) of soft-magnetizable material and parts (9) of substantially non-magnetizable material positioned between them, the inner system (3) comprising, in a similar division as with the top plate, a plurality of pole parts (6) of soft-magnetizable material and magnetic elements (5) positioned between them, **characterized** in that, the inner system (3), the center distance of adjacent pole parts (6) and magnetic elements (5), respectively, the so-called pole pitch, is smaller than ca. 8 mm.

4. Magnetic chuck according to one of the preceding claims, constructed in accordance with the compensation principle wherein magnetic elements (8) are also provided between the pole parts (7) in the top plate (2), **characterized** in that the width of the pole parts (7) is larger than, preferably substantially twice as large as, the width of the magnetic elements (8).

5. Magnetic chuck according to one of the preceding claims, wherein the inner system (3) is switchable between an on-position in which a maximum magnetic force is produced on the upper surface of the top plate (2), and an off-position in which no or substantially no external magnetic force is produced, **characterized** in that a linear displacement mechanism (11) for the inner system is provided, with which the inner system (3) is slidable parallel to the top plate (2) between the on- and off-positions and all intermediate positions so as to obtain a continuously adjustable holding force.

6. Magnetic chuck according to claim 5, **characterized** in that the linear displacement mechanism is a spindle and nut drive (11).

7. Magnetic chuck according to one of the preceding claims, **characterized** in that the inner system (3) is divided by a vertical partition (10) into at least two inner system parts (3A, 3B) each provided with its own displacement mechanism (11).

8. Magnetic chuck according to claim 7, **characterized** in that the inner system parts (3A, 3B) are spaced from each other, while between the inner system parts the top plate (2) is supported by a support portion (10) of the housing (1).

9. Magnetic chuck according to claim 7 or 9, **characterized** in that the partition (10) between the inner system parts (3A, 3B0 extends parallel to the switching direction thereof.

10. Magnetic chuck according to one of the preceding claims, which is used in a condition submerged into a fluid, wherein a fluid supply line is connectable to the chuck, and flushing holes (21) for the fluid open through the upper surface of the top plate (2) the flushing holes (21) being distributed in a regular patter (23) on the surface of the top plate (2) and being provided with screw-thread for receiving tap bolts of mechanical clamping elements.

11. Magnetic chuck according to claim 10, **characterized** in that a plurality of distribution tubes (19) are provided within the top plate (2) at regular intervals, the distribution tubes (19) connect to the flushing holes (21) and are supplied by a supply channel (18).

12. Magnetic chuck according to claim 11, **characterized** in that the distribution tubes (19) are spaced from each other a multiple of pole pitches and are disposed under the parts (9) of non-magnetizable material in the top plate (2).

13. Magnetic chuck according to claims 7, 8 and 11, **characterized** in that the supply channel (19) is formed above the support portion (10) of the housing (1) between the inner system parts (3A, 3B).

14. Magnetic chuck according to one of claims 11-13, **characterized** in that the flushing holes (21) are connected to the distribution tubes (19) through a restriction (22), the diameter of the restriction being substantially less than that of the distribution tubes.

## Patentansprüche

1. Magnetspannfutter, umfassend ein Gehäuse (1), eine Deckplatte (2), welche Polteile (7) umfaßt und an dem Gehäuse (1) befestigt ist, und einem inneren System (3), das magnetische Elemente (5) und Polteile (6) aufweist und in dem Gehäuse (1) unter der Deckplatte (2) vorgesehen ist, wobei das Magnetspannfutter mit einer Palette (4) zum reproduzierbaren Positionieren eines Werktisches einer Bearbeitungsvorrichtung kombiniert ist, **dadurch gekennzeichnet, daß** die Palette (4) als Gehäuse für das Magnetspannfutter dient und daß mindestens das innere System (3) innerhalb der Palette (4) vorgesehen ist.

2. Magnetspannfutter nach Anspruch 1, **dadurch gekennzeichnet, daß** das innere System (3) in der Palette (4) aufgenommen ist, und die Deckplatte (2) auf der Palette vorgesehen ist.

3. Magnetspannfutter nach Anspruch 1 oder 2, worin die Deckplatte (2) eine Anzahl von beabstandeten Polteilen (7) aus weichmagnetischem Material umfaßt und Teile (9) aus im wesentlichen nicht-magnetischem Material zwischen diesem vorgesehen sind, wobei das innere System in ähnlicher Unterteilung wie die Deckplatte einer Anzahl von Polteilen (6) aus weichmagnetischem Material umfaßt und magnetische Elemente (5) zwischen diesen vorgesehen sind, **dadurch gekennzeichnet, daß** das innere System (3), der Mittenabstand von benachbarten Polteilen (6) und die magnetischen Elemente (5), das heißt, der sogenannte Polabstand kleiner als 8 mm ist.

4. Magnetspannfutter nach einem der vorangegangenen Ansprüche, das in Übereinstimmung mit dem Kompensationsprinzip aufgebaut ist, worin magnetische Elemente (8) ebenso zwischen den Polteilen (7) in der Deckplatte (2) vorgesehen sind, **dadurch gekennzeichnet, daß** die Breite der Polteile (7) größer, vorzugsweise im wesentlichen zweimal so groß ist als die Breite der magnetischen Elemente (8).

5. Magnetspannfutter nach einem der vorangegangenen Ansprüche, worin das innere System (3) schaltbar ist zwischen einer Ein-Position, in welcher maximale magnetische Kraft auf der oberen Oberfläche der Deckplatte (2) erzeugt wird, und eine Aus-Position, in welcher im wesentlichen keine externe magnetische Kraft erzeugt wird, **dadurch gekennzeichnet, daß** ein linearer Verschiebemechanismus (11) für das innere System vorgesehen ist, mit welchem das innere System (3) parallel gleitbar zur Deckplatte (2) zwischen der Ein- und Aus-Position und allen Zwischenposition ist, so daß eine stetig anpaßbare Haltekraft erzielt wird.

6. Magnetspannfutter nach Anspruch 5, **dadurch gekennzeichnet, daß** der lineare Verschiebemechanismus ein Spindelantrieb (11) ist.

7. Magnetspannfutter nach einem der vorangegangenen Ansprüche, **dadurch gekennzeichnet, daß** das innere System (3) durch vertikale Unterteilung (10) in mindestens zwei innere Systemteile (3A,3B) unterteilt ist, welche jeweils mit einem eigenen Verchiebemechanismus (11) versehen sind.

8. Magnetspannfutter nach Anspruch 7, **dadurch gekennzeichnet, daß** die inneren Systemteile (3A, 3B) voneinander beabstandet sind, während die Deckplatte (2) zwischen den inneren Systemteilen durch ein Stützteil (10) des Gehäuses (1) gestützt ist.

9. Magnetspannfutter nach Anspruch 7 oder 9, **dadurch gekennzeichnet, daß** die Unterteilung (10) zwischen den inneren Systemteilen (3A, 3B) sich parallel zu ihrer Schaltrichtung erstreckt.

10. Magnetspannfutter nach einem der vorangegangenen Ansprüche, welches in einem Zustand verwendet wird, in dem es in Strömungsmittel eingetaucht ist, worin eine Strömungszufuhrleitung mit dem Spannfutter verbindbar ist, und Spüllöcher (21) für die Strömung sich durch eine obere Fäche der Deckplatte (2) öffnen, wobei die Spüllöcher (21) in einem regelmäßigen Muster (23) auf der Oberfläche der Deckplatte (2) verteilt sind, und Schraubenwindungen zum Aufnehmen von Schraubenbolzen von mechanischen Klammerelementen vorgesehen sind.

11. Magnetspannfutter nach Anspruch 10, **dadurch gekennzeichnet, daß** eine Anzahl von Verteilerrohren (19) innerhalb der Deckplatte (2) in regelmäßigen Abständen vorgesehen sind, wobei die Verteilerrohre (19) mit den Spüllöchern (21) verbunden sind und durch einen Versorgungskanal (18) versorgt werden.

12. Magnetspannfutter nach Anspruch 11, **dadurch gekennzeichnet, daß** die Verteilerrohre (19) voneinander durch ein Vielfaches der Polabstände beabstandet sind und unter den Teilen (9) des nicht-magnetischen Materials in der Deckplatte (2) vorgesehen sind.

13. Magnetspannfutter nach Anspruch 7, 8 und 11, **dadurch gekennzeichnet, daß** der Versorgungskanal (19) über dem Stützteil (10) des Gehäuses (1) zwischen den Innersystemteilen (3A, 3B) gebildet ist.

14. Magnetspannfutter nach einem der Ansprüche 11 - 13, **dadurch gekennzeichnet, daß** die Spüllöcher (21) mit den Verteilerrohren (19) durch eine Verengung (22) verbunden sind, wobei der Durchmesser der Verengung im wesentlichen kleiner als der der Verteilerrohre ist.

## Revendications

1. Mandrin magnétique, comportant un bâti (1), une plaque supérieure (2) ayant des pièces polaires (7) et fixée au bâti (1), et un système intérieur (3) ayant des éléments magnétiques (5) et des pièces polaires (6) et placé à l'intérieur du bâti (1) au-dessous de la plaque supérieure (2), le mandrin magnétique étant combiné avec une palette (4) pour un positionnement reproductible sur la table de travail d'un appareil d'usinage, caractérisé en ce que la palette (4) sert de bâti pour le mandrin magnétique, et au moins le système intérieur (3) étant placé à l'intérieur de la palette (4).

2. Mandrin magnétique selon la revendication 1, caractérisé en ce que le système intérieur (3) est reçu dans la palette (4) et la plaque supérieure (2) est montée sur la palette.

3. Mandrin magnétique selon la revendication 1 ou 2, dans lequel la plaque supérieure (2) comporte plusieurs pièces polaires espacées (7) en matière aimantable douce et des pièces (9) en matière sensiblement non aimantable positionnées entre elles, le système intérieur (3) comportant, selon une répartition similaire à celle de la plaque supérieure, plusieurs pièces polaires (6) en matière aimantable douce et des éléments magnétiques (5) positionnés entre elles, caractérisé en ce que, dans le système intérieur (3), la distance entre centres de pièces polaires (6) et d'éléments magnétiques (5) adjacents, respectivement, appelée le pas polaire, est inférieure à environ 8 mm.

4. Mandrin magnétique selon l'une des revendications précédentes, construit conformément au principe de la compensation, dans lequel des éléments magnétiques (8) sont également prévus entre les pièces polaires (7) dans la plaque supérieure (2), caractérisé en ce que la largeur des pièces polaires (7) est plus grande que, et de préférence sensiblement double de, la largeur des éléments magnétiques (8).

5. Mandrin magnétique selon l'une des revendications précédentes, dans lequel le système intérieur (3) peut être commuté entre une position en dans laquelle une force magnétique maximale est produite sur la surface supérieure de la plaque supérieure (2), et une position hors dans laquelle aucune ou pratiquement aucune force magnétique extérieure n'est produite, caractérisé en ce qu'un mécanisme (11) à déplacement linéaire pour le système intérieur est prévu, à l'aide duquel le système intérieur (3) peut coulisser parallèlement à la plaque supérieure (2) entre les positions en et hors et toutes les positions intermédiaires afin que l'on obtienne la force de maintien réglable en continu.

6. Mandrin magnétique selon la revendication 5, caractérisé en ce que le mécanisme à déplacement linéaire est une transmission (11) à broche et écrou.

7. Mandrin magnétique selon l'une des revendications précédentes, caractérisé en ce que le système intérieur (3) est divisé par une cloison verticale (10) en au moins deux parties (3A, 3B) de système intérieur pourvues chacune de son propre mécanisme (11) de déplacement.

8. Mandrin magnétique selon la revendication 7, caractérisé en ce que les parties (3A, 3B) du système intérieur sont espacées l'une de l'autre, tandis que la plaque supérieure (2) est supportée entre les parties du système intérieur par une partie (10) de support du bâti (1).

9. Mandrin magnétique selon la revendication 7 ou 8, caractérisé en ce que la cloison (10) entre les parties (3A, 3B) du système intérieur s'étend parallèlement à sa direction de commutation.

10. Mandrin magnétique selon l'une des revendications précédentes, qui est utilisé dans un état immergé dans un fluide, dans lequel une conduite d'alimentation en fluide peut être raccordée au mandrin, et des trous (21) de chasse pour le fluide s'ouvrent à travers la surface supérieure de la plaque supérieure (2), les trous (21) de chasse étant distribués en une configuration régulière (23) sur la surface de la plaque supérieure (2) et étant pourvus de filets de vis pour recevoir des vis de raccordement pour des éléments de serrage mécanique.

11. Mandrin magnétique selon la revendication 10, caractérisé en ce que plusieurs tubes (19) de distribution sont prévus à l'intérieur de la plaque supérieure (2) à intervalles réguliers, les tubes (19) de distribution sont raccordés aux trous (21) de chasse et sont alimentés par un canal (18) d'alimentation.

12. Mandrin magnétique selon la revendication 11, caractérisé en ce que les tubes (19) de distribution sont espacés les uns des autres d'un multiple des pas polaires et sont disposés au-dessous des pièces (9) en matière non aimantable dans la plaque supérieure (2).

13. Mandrin magnétique selon les revendications 7, 8 et 11, caractérisé en ce que le canal (19) d'alimentation est formé au-dessus de la partie (10) de support du bâti (1) entre les parties (3A, 3B) du système intérieur.

14. Mandrin magnétique selon l'une des revendications 11-13, caractérisé en ce que les trous (21) de chasse sont raccordés aux tubes (19) de distribution par l'intermédiaire d'un étranglement (22), le diamètre de l'étranglement étant sensiblement inférieur à celui des tubes de distribution.
